# EUROPEAN PATENT SPECIFICATION

(11) **EP 0 811 815 B1**
(45) Date of publication and mention of the grant of the patent: **28.08.2002**
(21) Application number: 97303871.4
(22) Date of filing: 05.06.1997
(51) Int. Cl.: F25J 3/02, F25J 3/08, F25J 3/04, B01D 3/14, B01D 3/32

(54) **Method and apparatus for purifying a substance**
Verfahren und Vorrichtung zur Reinigung von Substanzen
Procédé et dispositif de purification de substances

(30) Priority: 07.06.1996 US 660147; 10.01.1997 US 781463
(43) Date of publication of application: 10.12.1997
(73) Proprietor: THE BOC GROUP, INC., Murray Hill, New Providence, New Jersey 07974-2082 (US)
(72) Inventor: Whitlock, Walter Hugh, Chapel Hill, North Carolina 27516 (US)
(74) Representative: Wickham, Michael

(56) References cited:
- BE-A- 680 023
- US-A- 2 901 406
- US-A- 4 284 423

## Description

The present invention relates to a method and apparatus for purifying a gaseous or vaporous substance in which the substance is rectified in first and second distillation columns to remove heavy and light impurities from the substance.

Many different types of industrial processes require substances of ultra-high purity or impurity contents of less than about 5 parts per million. Nowhere is this need more acute than in the electronics industry in which purified process streams, such as etching substances, are required in the production of semiconductors. Impurities such as moisture and hydrocarbons can destroy a production run and thereby result in heavy monetary losses.

It is known to purify substances through distillation such that a purified substance is produced that is lean in light and heavy impurities. In this regard, light and heavy impurities are impurities that are respectively either more or less volatile than the substance to be purified. An example of distillation applied to the purification of monosilane can be found in US-A5,499,506. In accordance with the patent, a monosilane feed gas is liquefied within a bottom condenser/reboiler located in a bottom region of a distillation column to partially liquefy the feed. This partial liquefaction acts to separate the heavy impurities such as dichlorosilane and trichlorosilane from the feed. Hydrogen, monosilane and monochlorosilane which have not been liquefied are introduced between two mass transfer sections of the rectification column to produce a tower overhead. A top condenser/reboiler located within a top region of the distillation column condenses the tower overhead to reflux the distillation column and thereby to produce a column bottoms reboiled by the bottom condenser/reboiler. The tower overhead is then introduced into a second column for further rectification. This further rectification separates monosilane from the lighter impurities such as hydrogen to produce a purified liquid monosilane having an impurity content of approximately 100 parts per million.

The distillation according to US-A-5,499,506 requires two condenser/reboilers to produce boil-up, each of which adds a level of complexity and expense to the practice of such technique. For instance, the condenser/reboilers used in this patent produce a large inventory of monosilane within the distillation column system. Furthermore, the column operating pressure must be sufficiently high to effect the condensation against the reboiling. The system of condenser/reboilers also requires a sophisticated and automated control of the distillation process An additional problem with the method and like systems is that the apparatus and control must be optimised for the production of monosilane. Hence, separate column designs and/or systems are required for the purification of substances other than monosilane.

As will be discussed, the present invention provides a distillation method and apparatus which is capable of obtaining purified substances having an impurity content of less than 5 parts per million by volume that is far simpler in its implementation and control than methods and apparatus of the prior art. Additionally, the method and apparatus of the present invention can be rapidly reconfigured to purify a variety of substances.

According to the present invention there is provided a method of purifying a gaseous or vaporous substance containing heavy and light impurities according to claim 1.

The invention also provides an apparatus for purifying a gaseous or vaporous substance containing heavy and light impurities according to claim 7.

The double rectification of the vaporous substance in accordance with the present invention allows ultra-high purities to be obtained. This results in a distillation column system that is of simpler design and control than comparable prior art systems. A simple linkage between the columns can be employed. Since there is no simultaneous condensation and reboiling of process fluids, the distillation column system and method of the present invention allows for operating pressures that are lower than those of the prior art. Moreover, the use of a reboiler employing a replaceable heat exchange fluid allows different substances to be purified through the use of the same apparatus.

The method and apparatus according to the invention will now be described by way of example with reference to the accompanying drawings, in which:
Figure 1 is a schematic flow diagram of an apparatus for carrying out a method in accordance with the present invention; and
Figure 2 is a schematic fragmentary section taken along line 2-2 of Figure 1.

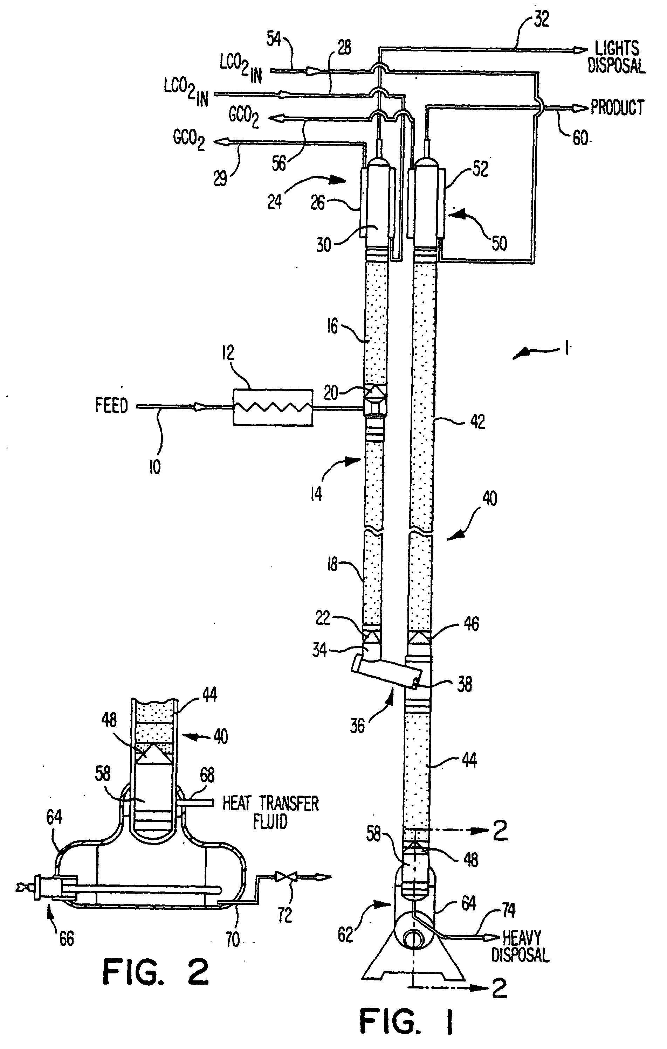

With reference to Figure 1 an apparatus 1 is illustrated for purifying a substance having heavy and light impurities. Light impurities are impurities that are more volatile than the substance to be purified. Heavy impurities are impurities that are less volatile than the substance to be purified. By way of example, if silane is a substance to be purified in apparatus 1, then the light impurities will include nitrogen, hydrogen, carbon monoxide and methane. The heavy impurities will include carbon dioxide, chlorosilanes, other hydrides of silicon, siloxanes, ethane, ethylene, propylene and moisture. If the substance to be purified in apparatus I consists of hydrogen bromide, then the light impurities would comprise nitrogen, air, hydrogen chloride, hydrogen and carbon dioxide. Heavy impurities would include chlorine, moisture, bromine and a volatile metallic bromide other than bromine compounds. It is to be noted that apparatus 1 could be used to purify a gaseous or vaporous substance comprising silane, carbon dioxide, nitrogen, hydrogen, methane, monochlorosilane, dichlorosilane, trichlosilane, ethane, propane, hydrogen bromide, hydrogen chloride, or boron trichloride.

A feed stream 10 of a gaseous substance containing both light and heavy impurities is cooled in a heat exchanger 12 to a temperature suitable for its rectification. The heat exchanger 12 utilises coolant that is selected to provide the necessary refrigeration appropriately to cool feed stream 10. In case of hydrogen bromide, boron trichloride or tungsten hexafluoride such a coolant can be liquid carbon dioxide.

Feed stream 10 after being cooled is fed into the first distillation column 14. Distillation column 14 has rectifying and stripping sections 16 and 18 that are filled with dumped (random) packing. The dumped packing of rectification section 16 is supported on support grid 20. The dumped packing within stripping section 18 is supported on support grid 22.

First distillation column 14 is provided with a head condenser 24 which consists of an outer section 26 which is fed with a liquid carbon dioxide coolant through a feed line 28. Outer section 26 surrounds an inner section 30 in which rising vapour is partly condensed to reflux first distillation column 14. The resultant vaporised carbon dioxide is discharged through a discharge line 29.

The substance to be purified is thus rectified within first distillation column 14 to produce a first tower overhead (top fraction) within inner section 30 of heat exchanger 24. The first tower overhead is concentrated in the light impurities. Excess light impurities that are not required for reflux of first distillation column 14 are disposed via a disposal pipeline 32 connected to the top of heat exchanger 24. The rectification also produces a column bottoms (bottom fraction) in a bottom region 34 of first distillation column 14. The column bottoms is lean in the light impurities and collects within a downwardly angled pipe section 36 having a baffle 38. The column bottoms produced within first distillation column 14 overflows baffle 38 and is thus fed to a second distillation column 40 having an upper rectifying section 42 and a lower stripping section 44. Dumped packing is supported within upper rectifying section 42 by support grid 46. Dumped packing is supported within lower stripping section 44 by support grid 48.

Second rectification column 40 is provided with a head condenser 50 of the same design as head condenser 24. Head condenser 50 has an outer section 52 into which liquid carbon dioxide is fed through a feed line 54. The tower overhead produced within distillation column 14 is in part condensed to reflux column 40 through the use of the liquid carbon dioxide coolant provided within head condenser. This causes the liquid carbon dioxide to vaporise and the vapour is discharged through a discharge pipeline 56.

Second distillation column 40 functions to rectify the column bottoms produced from the first distillation column 14. This rectification produces a second column bottoms in a bottom region 58 thereof that is concentrated in the heavy impurities. The tower overhead which passes into second head condenser 52 is lean in both the heavy and light impurities and thus constitutes purified product which is removed by means of a discharge line 60.

In order to provide boil-up (vapour) for second distillation column 40 and ultimately first distillation column 14, a reboiler 62 is provided having a reservoir 64 through which the bottom region 58 of the second distillation column projects. This reservoir contains a heat exchange fluid which is heated by an electrical heating element 66. The heat transfer fluid enters reservoir 64 via an inlet 68 and is discharged through a discharge line 70 provided with a valve 72. The heat transfer fluid is one having a condensation temperature above the bubble point temperature of the second column bottoms produced within second distillation column 40. This causes the second column bottoms to boil-up within bottom region 58 of second distillation column 40 in indirect heat exchange with the condensation of the heat exchange fluid. In order to prevent accumulation of the heavy components contained within the substance to be purified, bottom region 58 of distillation column 40 is provided with a discharge line 74 to permit discharge of accumulated liquid.

The heat exchange fluid is selected in accordance with the substance to be purified. In the case of silane, xenon can be used. R 22 may be used for hydrogen bromide and R 124 would be used for boron trichloride or tungsten hexafluoride. If desired, the illustrated apparatus may be used to purify more than one substance. For example, silane may be performed first, and then boron trichloride. The columns are flushed with nitrogen after the first purification is performed. The heat exchange fluid simply be changed to that appropriate for boron trichloride. Before being distilled, the boron trichloride is heated to at about 50°C so as to vaporise it and then cooled to 30°C at which temperature it enters the column 14. Furthermore, the coolant for heat exchanger 12 and head condensers 24 and 50 is changed from nitrogen in the purification of silane to carbon dioxide for boron trichloride. The materials used in apparatus 1 need to be compatible with the intended substance to be purified. If, for instance corrosive substances such as boron trichloride are to be purified, then apparatus 1 should be constructed of nickel or other corrosion-resistant metal or alloy. In the event that non-corrosive substances such as silane are to be purified, then the preferred material is stainless steel.

If desired, in the example of the purification of boron trichloride, it may be heated to 50°C and directly introduced into the first distillation column 14 at that temperature. Such vapour will then cool to a column operating temperature of 30°C shortly after entry. The entire distillation column system is typically of such small scale that superheated entry of the feed, although perhaps thermodynamically inefficient, does not result in any appreciable increase in operating cost. However the heat loading on the head condensers may increase and a point, for instance in the example of nitrogen, may be reached in which the distillation would not be cost effective and precooling would be desired. In other examples, a liquid feed or a subcooled liquid feed could alternatively be used when there would be no requirement for heat exchanger 12 to be included.

The rising vapour stream initiated by the boil-up produced by heating bottom region 58 of distillation column 40 initiates an ascending vapour phase within column 40 which due to the packing elements contacts the descending liquid phase formed by condensation of tower overhead through second head condenser 50. The vapour rises and is carried to first distillation column 14 by passage over baffle plate 38 of downwardly angled pipe 36. Such vapour thereby provides boil-up and initiation of an ascending vapour phase within first distillation column 14. This ascending vapour phase contacts the descending liquid phase produced through condensation of tower overhead produced by first head condenser 24.

The downwardly angled pipe 36 is merely a preferred method of coupling first and second distillation columns 14 and 40. It is self-regulating and does not require extensive controls. This type of connection between distillation columns also has wider applicability than in the illustrated embodiment.

By way of example, apparatus 1 can be constructed such that first distillation column 14 has an upper rectifying section of approximately 0,30 m (12 inches) and a lower stripping section of approximately 2,44 m (96 inches). Upper rectifying section can be constructed from a 0,013 m (1/2 inch) tube. Lower stripping section is constructed from a 0,025 m (1 inch) tube. Upper rectification section 42 of second rectification column 40 can be constructed from a 1 0,013 m (½ inch) (schedule 40) pipe. Lower stripping section 44 of second distillation column 40 can be constructed from a 12 inch length of schedule 40 pipe. All of such sections can be filled with MELLAPAK, Type B dumped packing. A stream of silane at a rage of 4 standard litres per minute may be introduced into first distillation column 14 at a temperature of approximately 10° C. A 20% recovery may be obtained having an impurity level reduced to 5 parts per billion.

## Claims

1. A method of purifying a gaseous or vaporous substance containing heavy and light impurities comprising:
rectifying said substance in a first distillation column having a rectifying section and a stripping section to produce a first bottom liquid fraction of said sustance being lean in said light impurities and a first top vapour fraction concentrated in said light impurities;
discharging excess light impurities from the top of the first distillation column;
introducing a liquid stream of said first bottom fraction into a second distillation column and rectifying said liquid stream therein to produce a second bottom liquid fraction concentrated in said heavy impurities and a second top vapour fraction of said sustance being lean in both said heavy and light impurities;
discharging liquid from the second bottom fraction to prevent accumulation of heavy impurities;
boiling said second liquid fraction within said second distillation column thereby to form an ascending vapour phase within said second distillation column;
withdrawing a stream of the ascending vapour from said second distillation column and introducing said vapour stream into said first distillation column and thereby providing ascending vapour therein; and
withdrawing said purified substance as product stream from the tower overhead of said second distillation column composed of said second top vapour fraction.

2. A method as claimed in claim 1, wherein said substance is carbon dioxide, nitrogen, hydrogen, methane, silane, dichlorosilane, trichlorosilane, ethane, propane, hydrogen chloride, hydrogen bromide, or boron trichloride.

3. A method as claimed in claim 1 or claim 2, wherein a heat exchange fluid having a condensation temperature above the bubble point temperature of said second bottom liquid fraction is vaporised, and heat is indirectly exchanged between the second column bottom liquid fraction and the heat exchange fluid such that said heat exchange fluid condenses.

4. A method as claimed in claim 3, wherein the stream of the ascending vapour is withdrawn from said second distillation column at a point situated at the entry of said liquid stream thereto.

5. A method as claimed in claim 4, wherein the vapour stream is introduced into the bottom region of the first distillation column.

6. A method as claimed in any one of the preceding claims, wherein said substance is pre-cooled to bring it to a temperature suitable for its rectification.

7. An apparatus for purifying a gaseous or vaporous substance containing heavy and light impurities comprising:
a first distillation column (14) having a rectifying section (16) and a stripping section (18) for rectifying said substance to produce a first bottom liquid fraction of said substance being lean in said light impurities and a first top vapour fraction concentrated in said light impurities;
a second distillation column (40) for rectifying a liquid stream composed of said first bottom liquid fraction, thereby to produce a second bottom liquid fraction concentrated in said heavy impurities and a second top vapour fraction of said substance lean in both heavy and light impurities;
means (36) for introducing said first bottom liquid stream into the second distillation column (40);
a reboiter (62) for boiling said second bottom liquid fraction and thereby to initiate formation of an ascending vapour phase within said second distillation column (40);
means (36) for withdrawing a vapour stream from said second distillation column (40) and for introducing said vapour stream into said first distillation column (14) thereby providing ascending vapour therein;
a condenser (24) at the head of the first distillation column (14) for condensing the first top vapour fraction;
a pipeline (32) connected to the top of the condenser (24) for discharging excess light impurities;
a discharge line (74) for the discharge of liquid from the second bottom liquid fraction at the bottom region (58) of the second distillation column (40) so as to prevent accumulation of the heavy components; and
means (60) for withdrawing said purified substance as product stream from the tower over head of the second distillation column (40) composed of said second top vapour fraction.

8. Apparatus as claimed in claim 7, wherein said reboiler (62) comprises:
vaporisation means (66) for vaporising a heat exchange fluid having a condensation temperature above the bubble point temperature of said second bottom liquid fraction; and
indirect heat exchange means (64) for indirectly exchanging heat between the second bottom liquid fraction and said heat exchange fluid such that said heat exchange fluid condenses and said second bottom liquid fraction boils.

9. Apparatus as claimed in claim 8, wherein:
said indirect heat exchange means (64) comprises a reservoir (64) containing said heat exchange fluid;
said second distillation column (40) has a bottom region (58) extending into said reservoir (64); and
said vaporisation means (66) comprises an electric heating element (66) located within said reservoir (64).

10. Apparatus as claimed in any one of claims 7 to 9, wherein a pipe downwardly sloping from the first distillation column (14) towards said second distillation column (40), constitutes both the means (36) for introducing said liquid stream into the second distillation column (40) and the means (36) for withdrawing a vapour stream from the second distillation column (40) and for introducing said vapour stream into the first distillation column (14), said pipe (36) being sized such that, in use, said vapour stream and said liquid stream flow past one another within said pipe in countercurrent directions.

11. Apparatus as claimed in any one of claims 7 to 10, further comprising precooling means (12) for cooling said substance to a temperature suitable for its rectification.

## Patentansprüche

1. Verfahren zum Reinigen einer gasförmigen oder dampfförmigen Substanz, die schwere und leichte Verunreinigungen enthält, das umfasst:
Rektifizieren der genannten Substanz in einer ersten Destillationssäule mit einem Rektifiziersabschnitt und einem Abstreifabschnitt zum Erzeugen einer ersten flüssigen Bodenfraktion der genannten Substanz, die arm an den genannten leichten Verunreinigungen ist, und einer ersten dampfförmigen Kopffraktion, die an den genannten leichten Verunreinigungen konzentriert ist,
Austragen überschüssiger leichter Verunreinigungen aus dem Kopf der ersten Destillationssäule,
Einleiten eines flüssigen Stroms der genannten ersten Bodenfraktion in eine zweite Destillationssäule und Rektifizieren des genannten flüssigen Stroms darin zum Erzeugen einer zweiten flüssigen Bodenfraktion, die an den genannten schweren Verunreinigungen konzentriert ist, und einer zweiten dampfförmigen Kopffraktion der genannten Substanz, die sowohl an den schweren als auch den leichten Verunreinigungen arm ist,
Austragen von Flüssigkeit aus der zweiten Bodenfraktion zur Verhinderung einer Anhäufung schwerer Verunreinigungen,
Sieden der genannten zweiten flüssigen Fraktion innerhalb der zweiten Destillationssäule, um dadurch eine aufsteigende Dampfphase in der zweiten Destillationssäule zu erzeugen,
Abziehen eines Stroms des aufsteigenden Dampfs aus der zweiten Destillationssäule und Einleiten des genannten Dampfstroms in die erste Destillationssäule und dadurch Erzeugen eines absteigenden Dampfs in dieser, und
Abziehen der genannten gereinigten Substanz als Produktstrom aus dem Turmkopfbereich der zweiten Destillationssäule, der aus der genannten zweiten dampfförmigen Kopffraktion besteht.

2. Verfahren nach Anspruch 1, wobei die genannte Substanz Kohlendioxid, Stickstoff, Wasserstoff, Methan, Silan, Dichlorsilan, Trichlorsilan, Äthan, Propan, Chlorwasserstoff, Bromwasserstoff oder Bortrichlorid ist.

3. Verfahren nach Anspruch 1 oder 2, wobei ein Wärmeaustauschmedium mit einer Kondensationstemperatur oberhalb der Dampfblasenbildungstemperatur der genannten zweiten flüssigen Bodenfraktion verdampft wird und Wärme indirekt zwischen der zweiten flüssigen Bodenfraktion und dem Wärmeaustauschmedium ausgetauscht wird, so daß das Wärmeaustauschmedium kondensiert.

4. Verfahren nach Anspruch 3, wobei der Strom des aufsteigenden Dampfs aus der zweiten Destillationssäule an einer Stelle abgezogen wird, die am Eintritt des genannten flüssigen Stroms in diese gelegen ist.

5. Verfahren nach Anspruch 4, wobei der Dampfstrom in den Bodenbereich der ersten Destillationssäule eingeleitet wird.

6. Verfahren nach einem der vorhergehenden Ansprüche, wobei die genannte Substanz vorgekühlt wird, um sie auf eine für ihre Rektifizierung geeignete Temperatur zu bringen.

7. Gerät zum Reinigen einer gasförmigen oder dampfförmigen Substanz, die schwere und leichte Verunreinigungen enthält, mit:
einer ersten Destillationssäule (14) mit einem Rektifizierabschnitt (16) und einem Abstreifabschnitt (18) zum Rektifizieren der genannten Substanz zum Erzeugen einer ersten flüssigen Bodenfraktion der genannten Substanz, die arm an den genannten leichten Verunreinigungen ist, und einer ersten dampfförmigen Kopffraktion, die an den leichten Verunreinigungen konzentriert ist,
einer zweiten Destillationssäule (40) zum Rektifizieren eines aus der ersten flüssigen Bodenfraktion bestehenden flüssigen Stroms, um eine zweite flüssige Bodenfraktion zu erzeugen, die an den genannten schweren Verunreinigungen konzentriert ist, und eine zweite dampfförmige Kopffraktion der genannten Substanz zu erzeugen, die sowohl an schweren als auch an leichten Verunreinigungen arm ist,
Mitteln (36) zum Einleiten des ersten flüssigen Bodenstroms in die zweite Destillationssäule (40),
einem Rückverdampfer (62) zum Sieden der genannten zweiten flüssigen Bodenfraktion und dadurch zum Auslösen der Bildung einer aufsteigenden Dampfphase in der zweiten Destillationssäule (40),
Mitteln (36) zum Abziehen eines Dampfstroms aus der zweiten Destillationssäule (40) und zum Einleiten des Dampfstroms in die erste Destillationssäule (14) und dadurch zum Bereitstellen eines aufsteigenden Dampfs in dieser,
einem Kondensator (24) am Kopf der ersten Destillationssäule (14) zum Kondensieren der ersten dampfförmigen Kopffraktion,
einer Rohrleitung (32), die mit dem oberen Ende des Kondensators (24) verbunden ist, um überschüssige leichte Verunreinigungen auszutragen,
einer Austragsleitung (74) zum Austragen von Flüssigkeit aus der zweiten flüssigen Bodenfraktion am Bodenbereich (58) der zweiten Destillationssäule (40), um so eine Anhäufung der schweren Komponenten zu verhindern, und
Mitteln zum Abziehen der genannten gereinigten Substanz als Produktstrom aus dem Turmkopf der zweiten Destillationssäule (40), der aus der zweiten dampfförmigen Kopffraktion besteht.

8. Einrichtung nach Anspruch 7, wobei der Rückverdampfer (62) aufweist:
Verdampfungsmittel (66) zum Verdampfen eines Wärmeaustauschmediums, das eine Kondensationstemperatur oberhalb der Dampfblasenbildungstemperatur der zweiten flüssigen Bodenfraktion hat, und
indirekte Wärmeaustauschmittel (64) für den indirekten Wärmeaustausch zwischen der zweiten flüssigen Bodenfraktion und dem Wärmeaustauschmedium, so daß das Wärmeaustauschmedium kondensiert und die zweite flüssige Bodenfraktion siedet.

9. Einrichtung nach Anspruch 8, wobei:
die genannten indirekten Wärmeaustauschmittel (64) einen Behälter (64) aufweisen, der das Wärmeaustauschmedium enthält,
die zweite Destillationssäule (40) einen Bodenbereich (58) aufweist, der in dem Behälter (64) hineinragt, und
die Verdampfungsmittel (66) ein elektrisches Heizelement (66) aufweisen, das in dem Behälter (64) angeordnet ist.

10. Einrichtung nach einem der Ansprüche 7 bis 9, wobei ein Rohr abwärts von der ersten Destillationssäule (14) zur zweiten Destillationssäule (40) geneigt verläuft und sowohl die Mittel (36) zum Einleiten des genannten flüssigen Stroms in die zweite Destillationssäule (40) als auch die Mittel (36) zum Abziehen eines Dampfstroms aus der zweiten Destillationssäule (40) und zum Einleiten des Dampfstroms in die erste Destillationssäule (14) bildet, wobei das Rohr (36) so bemessen ist, daß im Betrieb der genannte Dampfstrom und der genannte flüssige Strom aneinander vorbei in Gegenstromrichtungen in diesem Rohr fließen.

11. Einrichtung nach einem der Ansprüche 7 bis 10, die weiter Vorkühlmittel (12) zum Abkühlen der genannten Substanz auf eine für ihre Rektifizierung geeignete Temperatur aufweist.

## Revendications

1. Procédé d'épuration d'une substance gazeuse ou vaporeuse contenant des impuretés lourdes et légères, comprenant les étapes consistant à :
rectifier ladite substance dans une première colonne de distillation possédant une section de rectification et une section de stripping pour produire une première fraction liquide de pied de colonne de ladite substance qui soit pauvre en ces dites impuretés légères et une premiére fraction vapeur de tête concentrée en ces dites impuretés légères ;
décharger les impuretés légères en excédent de la tête de la première colonne de distillation ;
introduire un flux liquide de ladite première fraction de pied de colonne dans une seconde colonne de distillation et y rectifier ledit flux liquide pour produire une seconde fraction liquide de pied de colonne concentrée en dites impuretés lourdes et une seconde fraction vapeur de tête de ladite substance qui soit pauvre à la fois en dites impuretés lourdes et légères ;
décharger le liquide de la seconde fraction de pied de colonne pour empêcher l'accumulation d'impuretés lourdes ;
faire bouillir ladite seconde fraction liquide dans ladite seconde colonne de distillation afin de former ainsi une phase vapeur ascendante dans ladite seconde colonne de distillation ;
prélever un flux de vapeur ascendante de ladite seconde colonne de distillation et introduire ledit flux de vapeur dans ladite première colonne de distillation et y fournir ainsi une vapeur ascendante ; et
prélever ladite substance épurée en tant que flux de produit, du produit de tête sortant de ladite seconde colonne de distillation, composé de ladite seconde fraction vapeur de tête.

2. Procédé selon la Revendication 1, dans lequel ladite substance est du dioxyde de carbone, de l'azote, de l'hydrogène, du méthane, du silane, du dichlorosilane, du trichlorosilane, de l'éthane, du propane, du chlorure d'hydrogène, du bromure d'hydrogène ou du trichlorure de bore.

3. Procédé selon la Revendication 1 ou la Revendication 2, dans lequel un fluide d'échange de chaleur ayant une température de condensation supérieure à la température du point de bulle de ladite seconde fraction liquide de pied de colonne est vaporisé, et de la chaleur est échangée indirectement entre la seconde fraction liquide de pied de colonne et le fluide d'échange de chaleur de telle sorte que ledit fluide d'échange de chaleur se condense.

4. Procédé selon la Revendication 3, dans lequel le flux de vapeur ascendante est prélevé de ladite seconde colonne de distillation en un point situé à l'entrée dudit flux liquide dans celle-ci.

5. Procédé selon la Revendication 4, dans lequel le flux de vapeur est introduit dans la zone de pied de la première colonne de distillation.

6. Procédé selon l'une quelconque des Revendications précédentes, dans lequel ladite substance est pré-refroidie pour l'amener à une température adaptée à sa rectification.

7. Dispositif d'épuration d'une substance gazeuse ou vaporeuse contenant des impuretés lourdes et légères, comprenant :
une première colonne de distillation (14) ayant une section de rectification (16) et une section de stripage (18) pour rectifier ladite substance afin de produire une première fraction liquide de pied de colonne de ladite substance qui soit pauvre en ces dites impuretés légères et une première fraction vapeur de tête concentrée en ces dites impuretés légères ;
une seconde colonne de distillation (40) pour rectifier un flux liquide composé de ladite première fraction liquide de pied de colonne, afin de produire ainsi une seconde fraction liquide de pied de colonne concentrée en dites impuretés lourdes et une seconde fraction vapeur de tête de ladite substance qui soit pauvre à la fois en dites impuretés lourdes et légères ;
des moyens (36) pour introduire ledit premier flux liquide de pied de colonne dans la seconde colonne de distillation (40) ;
un rebouilleur (62) pour faire bouillir ladite seconde fraction liquide et ainsi initier la formation d'une phase vapeur ascendante dans ladite seconde colonne de distillation (40) ;
des moyens (36) pour prélever un flux de vapeur de ladite seconde colonne de distillation (40) et pour introduire ledit flux de vapeur dans ladite première colonne de distillation (14), y fournissant ainsi une vapeur ascendante ;
un condenseur (24) en tête de la première colonne de distillation (14) pour condenser la première fraction vapeur de tête ;
une conduite (32) reliée à la tête du condenseur (24) pour décharger les impuretés légères en excédent ;
une canalisation de décharge (74) pour la décharge du liquide de la seconde fraction liquide de pied de colonne au niveau de la zone de pied (58) de la seconde colonne de distillation (40) afin d'empêcher l'accumulation des composants lourds ; et
des moyens (60) pour prélever ladite substance épurée en tant que flux de produit, du produit de tête sortant de la seconde colonne de distillation (40), composé de ladite seconde fraction vapeur de tête.

8. Dispositif selon la Revendication 7, dans lequel ledit rebouilleur (62) comprend:
des moyens de vaporisation (66) pour vaporiser un fluide d'échange de chaleur ayant une température de condensation supérieure à la température du point de bulle de ladite seconde fraction liquide de pied de colonne ; et
des moyens (64) d'échange indirect de chaleur pour échanger de manière indirecte de la chaleur entre la seconde fraction liquide de pied de colonne et ledit fluide d'échange de chaleur de telle sorte que ledit fluide d'échange de chaleur se condense et que ladite seconde fraction liquide de pied de colonne s'évapore par ébullition.

9. Dispositif selon la Revendication 8, dans lequel:
lesdits moyens (64) d'échange indirect de chaleur comprennent un réservoir (64) contenant ledit fluide d'échange de chaleur ;
ladite seconde colonne de distillation (40) possède une zone de pied (58) s'avançant à l'intérieur dudit réservoir (64) ; et
lesdits moyens de vaporisation (66) comprennent un élément chauffant électrique (66) situé à l'intérieur dudit réservoir (64).

10. Dispositif selon l'une quelconque des Revendications 7 à 9, dans lequel une canalisation inclinée vers le bas, partant de la première colonne de distillation (14) en direction de ladite seconde colonne de distillation (40), constitue à la fois les moyens (36) pour introduire ledit premier flux liquide dans la seconde colonne de distillation (40) et les moyens (36) pour prélever un flux de vapeur de la seconde colonne de distillation (40) et pour introduire ledit flux de vapeur dans la première colonne de distillation (14), ladite canalisation (36) étant d'une taille telle que, à l'utilisation, ledit flux de vapeur et ledit flux de liquide s'écoulent en se croisant dans ladite canalisation dans des directions opposées.

11. Dispositif selon l'une quelconque des Revendications 7 à 10, comprenant de plus des moyens de prérefroidissement (12) pour refroidir ladite substance à une température adaptée à sa rectification.
